Europäisches Patentamt

European Patent Office

Office européen des brevets

(19)

(11) Publication number: **0 160 283**
**B1**

(12) **EUROPEAN PATENT SPECIFICATION**

(45) Date of publication of patent specification: **07.06.89**

(21) Application number: **85105107.8**

(22) Date of filing: **26.04.85**

(51) Int. Cl.⁴: **G 01 N 21/07, B 04 B 5/04,
B 04 B 15/02, B 04 B 13/00**

(54) **Heating system for rotating members.**

(30) Priority: **03.05.84 US 606787**

(43) Date of publication of application:
**06.11.85 Bulletin 85/45**

(45) Publication of the grant of the patent:
**07.06.89 Bulletin 89/23**

(84) Designated Contracting States:
**BE CH DE FR GB IT LI NL SE**

(56) References cited:
**DE-B-2 560 001
US-A-3 916 152
US-A-4 119 834
US-A-4 279 862**

(73) Proprietor: **ABBOTT LABORATORIES
14th Street and Sheridan Road North St
North Chicago Illinois 60064 (US)**

(72) Inventor: **Schultz, Steven G.
2204 Funderburk Drive
Winthrop Harbor Illinois 60096 (US)**

(74) Representative: **Modiano, Guido et al
MODIANO, JOSIF, PISANTY & STAUB Modiano
& Associati Via Meravigli, 16
I-20123 Milan (IT)**

Courier Press, Leamington Spa, England.

## Description

This invention relates to a heating system, and more specifically to a method and apparatus for radiation heating of a rapidly rotating substrate.

In published European patent applications Nos. 0160282 and 0160901 filed concurrently herewith there is described a method and apparatus for carrying out chemical testing in which an entire chemical test is effected on a rotating centrifuge. The centrifuge as disclosed in those copending applications is provided with a rotating plate on which there is mounted one or more sample processor card holders which rotate with the plate for generating centrifugal forces. The sample processor card holder mounted in such holders on the plate is rotatable relative to the plate to enable the direction in which the centrifuge force thus generated acts on a sample processor card positioned in the holder.

The sample processor card, in accordance with the preferred embodiments as described in those copending applications, is an essentially closed container which is provided with a reagent used in the particular chemical test to be carried out and means for supplying a sample to the card. Thus, in use, the sample is inserted into the card and the card positioned in the holder on the centrifuge. Centrifugal force is thus used to release the reagent from its container in the card and displaces both the reagent and sample through the card for reaction as part of the chemical test as well as, in the preferred embodiments, to effect liquid-solid separation by centrifugation before the sample is contacted with the reagent.

The product of the reaction is finally displaced to a cuvette chamber wherein the chemical reaction is determined, usually by optical means, to ascertain the results of the chemical test.

As is described in the foregoing applications, the method and apparatus there disclosed is particularly well suited for use in the determination of blood chemistries. Because, however, the temperature at which the reaction between the sample and reagent is carried out should be controlled to achieve accurate results, it is necessary, in most cases, to heat the reagent and/or sample to insure that they are within a relatively narrow temperature range. That heating operation is complex by reason of the fact that the centrifuge plate typically makes one revolution every 30 milliseconds, and thus supplying heating to the rapidly rotating card represents a difficult task. In addition, the centrifuge plate frequently carries a number of different cards at the same time, each of which must be selectively heated from differing starting temperatures. It is not uncommon for the centrifuge plate to carry a number of cards, each of which is at a different temperature and all of which must be brought to the optimum temperature within a short period of time, typically one to two minutes.

It is accordingly an object of the present invention to provide a method and apparatus for heating a rapidly rotating element.

It is a more specific object of the invention to provide a method and apparatus for selectively heating each of a number of rotating elements carried on a centrifuge plate without contact between the heating device and the rotating element.

It is another object of the invention to provide a method and apparatus for selectively heating a rotating chemical reaction vessel to control the temperature of the contents thereof.

According to one aspect of the invention, these and other objects which will become apparent hereinafter are achieved by an apparatus for heating a rapid rotating article equipped with temperature sensing means comprising:

(a) strobe means capable of emitting radiant energy and positioned to radiate energy into the article;

(b) a light source positioned to illuminate temperature sensing means carried on the article during a portion of the rotation of the article, the temperature sensing means being adapted to reflect radiant energy as a function of the temperature of the article;

(c) light detector means to detect changes in the light reflected from the temperature sensing means; and

(d) control means to energize the strobe means in response to the light detector means whereby the light detector means sense light reflected by the temperature sensing means as a measure of the temperature on the article and energizes the strobe means to heat the article.

According to another aspect of the invention, these and other objects are achieved by a method for heating a rotating article having a temperature sensing and indicating element mounted thereon, characterized in that it comprises the steps of:

(a) illuminating the temperature sensing and indicating element with a light source,

(b) measuring the change in light reflected from the temperature sensing and indicating element, wherein the temperature sensing and indicating means is adapted to reflect light as a function of the temperature of the article, and,

(c) energizing a strobe light in response to the measurement of step (b) and in synchronism with the rotation of the article to radiate energy onto the article to heat the same.

These and other objects and advantages of the invention will appear more fully hereinafter, and, for purposes of illustration but not of limitation, an embodiment of the invention is shown in the accompanying drawings where:

Fig. 1 is a schematic top view of a centrifuge equipped with the heating system of the present invention;

Fig. 2 is a sectional view taken along the lines 2—2 in Fig. 1;

Fig. 3 is a plan view illustrating a sample processor card employed in the practice of this invention;

Fig. 4 is a sectional view taken along the lines 4—4 in Fig. 3;

Fig. 5 is a schematic illustration of the light source and detector arrangement employed in the practice of this invention;

Fig. 6 is a schematic view of the control system employed in the heating system of the invention.

Fig. 7 is a side view in elevation of a preferred sample processor card used in the practice of the invention.

The concepts of the invention reside in a method and apparatus for heating a rapidly rotating article which includes a strobe light capable of emitting radiant energy which is positioned to radiate energy onto the article to be heated. Positioned on that article is a temperature sensing means rotating therewith, the temperature sensing means being adapted to reflect radiant energy as a function of its temperature. A light source is positioned to illuminate the temperature sensing means during rotation of the article and the light detector measures the changes in the light reflected by the temperature sensing means. If the temperature of the temperature sensing means is too low, a control circuit operatively connected to the detector causes the strobe light to be energized in synchronism with the rotation of the article to illuminate the article periodically, for example, during periodic rotations until the article is heated to the desired temperature.

It has been found, in accordance with the practice of the invention, that the article can be heated effectively, and that a number of articles rotating together can be individually and selectively heated.

The concepts of the present invention are particularly well suited in the heating of chemical reagents present in sample processor cards used in accordance with the foregoing copending applications. For example, the strobe can be pulsed for no longer than about 2 milliseconds during each revolution of the card with the plate. Since the temperature sensing means is associated with each card, each card can be selectively heated to bring it to the desired temperature, independent of the temperature of the other card.

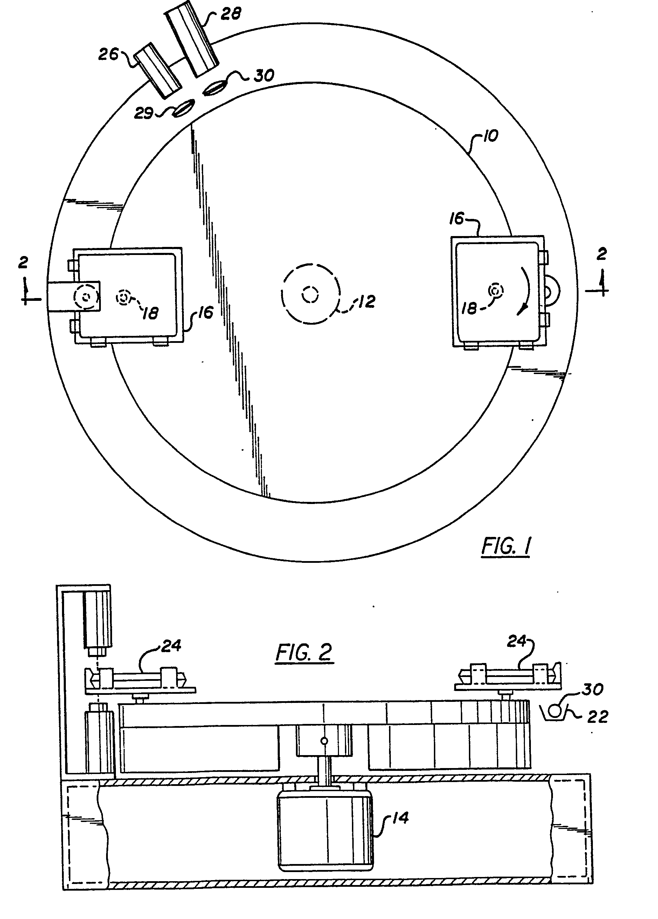

Referring now to the drawings for a more detailed description of the invention, there is shown in Figs. 1 and 2 a centrifuge equipped with the heating system of the present invention. The centrifuge includes a plate member 10 which is mounted for rotation on an axis 12, and is driven by suitable drive means 14, preferably an electrical motor capable of operating at high speeds. Mounted on the plate member 10 is at least one sample processor card holder 16 as described in published European patent application No. 0160901. The card holder 16 is akin to a tray and is rotatably mounted relative to the plate member 10 about an axis 18. The holder 16 can thus be rotated or indexed relative to the plate member 10 by suitable drive means not shown in the drawing for ease of description. The important feature is that the card holder 16 be adapted to receive the sample processor card and be rotatable relative to the plate member 10 so that the direction of centrifugal force acting on the sample processor card can be altered to effect the necessary fluid transport functions during the chemical testing operation.

The centrifuge is also provided with a strobe light 20 surrounded by a reflector 22 as shown most clearly in Fig. 2 of the drawings. The strobe 20 can be positioned beneath the holder 16 to illuminate the lower portion of a sample processor card 24 as shown in Fig. 2 of the drawings.

Mounted adjacent to the rotatable plate 10 is a light source 26 which is positioned to emit light through a lens 29 onto a portion of the sample processor card 16 during its rotation with the plate member 10 about the axis 12. Positioned adjacent to the light source 26 is a light detector 28 which is positioned to receive light reflected from a portion of the sample processor card 24 through a lens 30, as will be described more fully hereinafter.

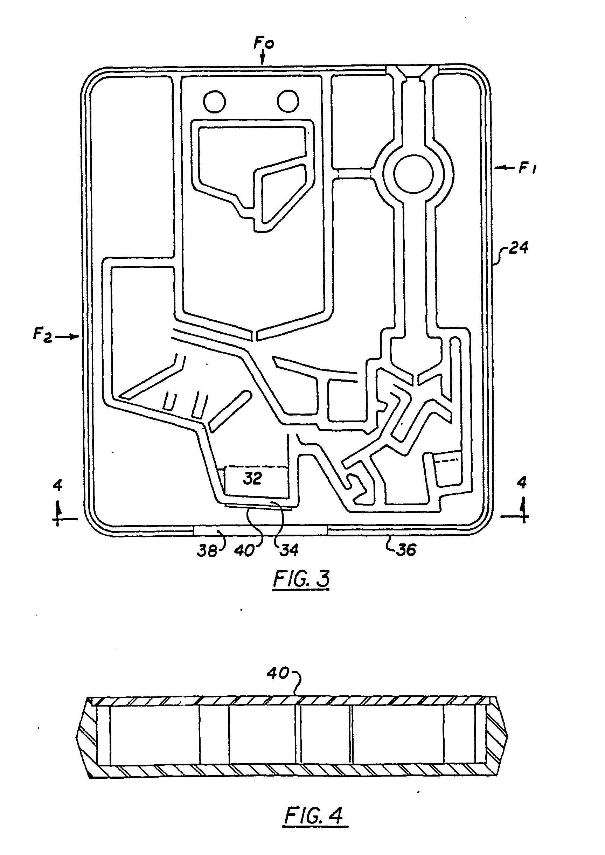

A typical sample processor card used in the practice of this invention is described in detail in published European patent application No. 0160282 and is also illustrated in Figs. 3 and 4 of the drawings. The sample processor card includes means to introduce a sample to be analyzed, a supply of reagent and an overflow chamber to receive overflow sample inserted into the card. Sample is thus introduced into the card and moved through the various chambers defined therein by centrifugal force so that excess quantities of the sample introduced to the card flow into the overflow chamber. The sample and reagent are then mixed each with the other by centrifugal force acting in either the direction $F_0$ or $F_1$, until the reaction product formed by the reagent and sample is moved to a cuvette or measuring chamber so that the necessary measurement on the reaction product can be carried out, usually by optical means. The cuvette chamber 32, which is more fully described in the foregoing copending application, is a chamber in which the optical characteristics of the reaction product between the reagent and the sample are measured by suitable optical techniques well known to those skilled in the art. The cuvette chamber has a lateral wall 34 onto which there is fixed a temperature sensing device 40. Because of the proximity between the temperature sensing device 40 and the contents of the cuvette chamber 32, the temperature sensing device is essentially maintained at the temperature existing in the cuvette chamber 32. Since the exterior wall 34 is interior to the exterior wall 36, in the preferred embodiment of the invention of the card 24, there is provided a window 38 providing access to the temperature sensing device 40. Thus, the temperature sensing device 40 can be viewed through the window 38, as will be more fully described hereinafter.

In the preferred embodiment of the invention, the sample processor card 24 is placed in the sample holder 16 so that the window 38 extends opposite to the axis of rotation 12 of the plate member 10. After the manipulative steps, which are more fully described in the foregoing copending applications, have been carried out, and the reaction product of the sample and reagent are in the area of the cuvette chamber 32, the temperature sensing means 40 has a temperature substantially the same as the contents of the cuvette chamber 32. The light source 26 illustrated in Fig. 1 is positioned to illuminate the temperature sensing means 40 during each rotation of the sample processor card. During that rotation, it emits a light pulse through lens 29 as the temperature sensing means 40 passes by. The temperature sensing means 40 is preferably a light sensing element, usually in the form of liquid crystal, whose light reflectivity changes as a function of temperature. Thus, the light detector 28 measures through lens 30 the intensity of the light reflected by the temperature sensing element 40 as a measure of the temperature of the contents of the cuvette cuvette chamber 32.

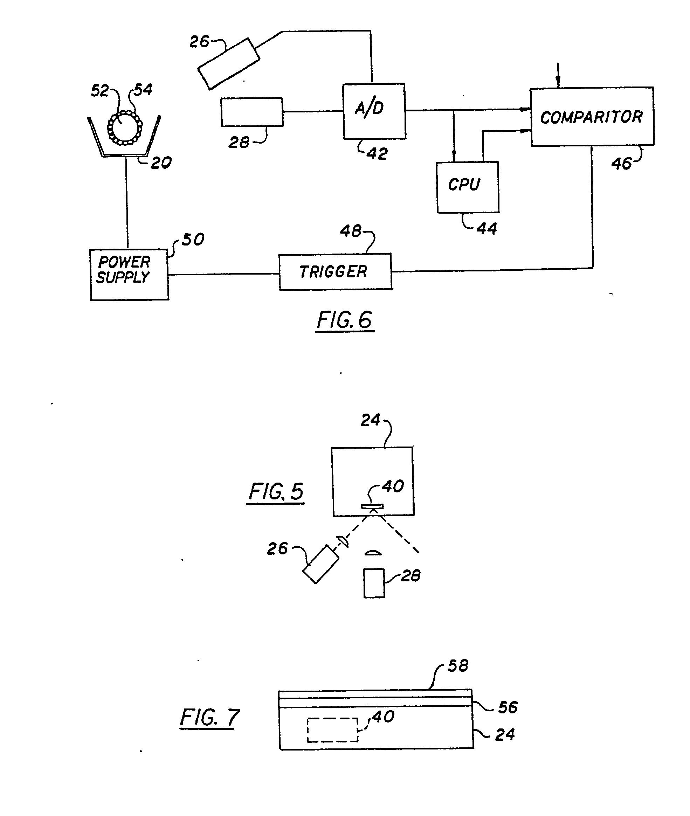

The details of the positional relationship between the light source 26 and the detector 28 relative to the temperature sensing element 40 carried by card 24 are shown in greater detail in Fig. 5 of the drawings. In the preferred embodiment as shown in Fig. 5, the light source 26 is positioned at an angle with respect to the temperature sensing means 40 so that direct reflected light leaving the temperature sensing element 40 follows a path away from the light detector 28. The light detector 28 as shown in Fig. 5 can be positioned out of the reflected light path so that it measures the change in reflectivity of the temperature sensing element 40, rather than the light directly reflected by it.

In the preferred practice of the invention, the light source 26 is a light emitting diode or LED. Such LED's are preferred by reason of their long life, the fact that they emit a light source which is fairly monochromatic and the fact that they are a cool source of light imparting no substantial heat to the temperature sensing element 40. In addition, such LED's can be pulsed for extremely short periods, for example, of the order of 300 microseconds and yet provide a fairly intense source of light. In fact, in the one preferred embodiment of the invention, it has been found that infrared LED's provide the best results, being brighter. As an alternative, use can also be made of a LED capable of emitting visible light. Also, some detectors are more sensitive in the infrared reagion of the spectrum. The detector itself can be any of a variety of commercially available light detectors, the details of which form no part of the present invention.

The control system is described in greater detail in Fig. 6 of the drawing. As there described, the light source 26 is positioned to illuminate a temperature sensing element 40 on the card, and the indirectly reflected light is detected by the light detector 28. The output from the light detector 28 is transmitted to an analog-to-digital converter 42 which converts the signal, synchronized with the rotation of the card on the centrifuge, to a digital signal which is processed by central processing unit 44 and a comparator 46. While the details of the analog-to-digital converter 42, the central processing unit 44 and the comparator 46 form no part of the present invention, the digitized signal is compared in the comparator with a signal representing a predetermined or threshold temperature which is programmed at the operator's discretion in the comparator 46. If the reflectivity of the temperature sensing element 40 indicates that the temperature of the card on which the temperature sensing element is mounted is below the threshold temperature, then the comparator 46 generates a signal actuating a trigger 48 which in turn controls a power supply 50 to energize the strobe 20. If, on the other hand, the temperature of the card as indicated by the temperature sensing element 40 is at a temperature higher than the threshold temperature, then no signal is generated, and hence the strobe is not actuated during that revolution of the card.

As will be appreciated by those skilled in the art, the illumination of the temperature sensing element 40 on the card by the light source 26 is synchronized with the spin rate of the plate so that each of a number of cards present on the rotating centrifuge can be individually examined by the light source 26 and the light detector 28 to determine their respective temperatures. By the same token, the central processing unit can be programmed to monitor the rotational speed of the centrifuge so that a given card, when the temperature thereof is below the threshold temperature set in the comparator, is illuminated as it passes adjacent the strobe 20 after its temperature has been sensed by the detector 28. For example, if the detector 28 is positioned 75° of rotation before the position of the strobe light, the central processing unit will, after detecting a temperature below the threshold temperature, delay energizing the strobe 75° for rotation so that the strobe is energized when that card bears the closest proximity to the strobe 20.

The strobe itself, shown schematically in Fig. 6 of the drawings, is preferably a xenon strobe light 52 which is surrounded by an ultraviolet absorbing coating 54 to absorb most of the ultraviolet radiation given off by the xenon light. Many of the chemical reactants employed in determining blood chemistries decompose in the presence of ultraviolet radiation, and hence the coating on the light is an effective measure to minimize such degradation.

In accordance with one preferred embodiment of the invention, it is sometimes desirable to employ a sample processor card which contains a coating on the face opposite the xenon strobe to maximize absorption of the radiant energy given off by the strobe light. One effective system for accomplishing that result is illustrated in Fig. 7 of the drawing. In that preferred embodiment, the card 24 itself is provided with a layer of adhesive 56 to secure to one face of the card a paper label 58. The adhesive is preferably formed of a light-absorbing material, and is preferably black in color to maximize the heat energy absorbed by the card to provide more efficient heating by the strobe light.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Apparatus for heating a rapidly rotating article (24) equipped with temperature sensing means comprising:

(a) strobe means (20) capable of emitting radiant energy and positioned to radiate energy onto the article (24);

(b) a light source (26) positioned to illuminate the temperature sensing means (40) carried on the article (24) during a portion of the rotation of the article (24), the temperature sensing means being adapted to reflect radiant energy as a function of the temperature of the article (24);

(c) light detector means (28) to detect changes in the light reflected from the temperature sensing means (40); and

(d) control means (42, 44, 46, 48, 50) to energize the strobe means (20) in response to the light detector means (28)

whereby the light detector means (28) sense light reflected by the temperature sensing means (40) as a measure of the temperature on the article (24) and energizes the strobe means (20) to heat the article (24).

2. Apparatus as defined in claim 1 wherein the strobe means (20) includes a xenon strobe light.

3. Apparatus as defined in claim 1 wherein the light source (26) is a light emitting diode (26).

4. Apparatus as defined in claim 1 wherein the temperature sensing means (40) is a liquid crystal.

5. Apparatus according to claim 3, characterized in that said light emitting diode (26) is an infrared light emitting diode.

6. Apparatus according to claim 3, characterized in that said light emitting diode (26) is capable of emitting visible light.

7. Apparatus according to claim 1, characterized in that said rapidly rotating article (24) comprises a sample processor card (24) in a centrifuge (10, 14, 16).

8. A method for heating a rapidly rotating article (24) having a temperature sensing and indicating element (40) mounted thereon, comprising the steps of:

(a) illuminating the temperature sensing and indicating element (40) with a light source (26),

(b) measuring the change in light reflected from the temperature sensing and indicating element (40), wherein the temperature sensing and indicating means (40) is adapted to reflect light as a function of the temperature of the article (24), and,

(c) energizing a strobe light (20) in response to the measurement of step (b) and in synchronism with the rotation of the article (24) to radiate energy onto the article (24) to heat the same.

9. A method according to claim 8, wherein a light emitting diode (26) is used as the light source.

10. A method according to claim 8, characterized by the step of measuring indirectly reflected light to determine the change in reflectivity of the temperature sensing and indicating element (40).

## Patentansprüche

1. Vorrichtung zur Aufheizen eines schnell rotierenden Gegenstands (24), der mit einer Temperatursensoreinrichtung ausgestattet ist, die aufweist:

(a) eine Strobeimpulseinrichtung (20), die Strahlungsenergie abgeben kann und derart angeordnet ist, daß die Strahlungsenergie auf den Gegenstand (24) gerichtet wird,

(b) eine Lichtquelle (26), die vorgesehen ist, um die Temperatursensoreinrichtung (40), die am Gegenstand (24) vorgesehen ist, während eines Teils der Drehung des Gegenstandes (24) zu beleuchten, wobei die Temperatursensoreinrichtung derart ausgelegt ist, daß sie Strahlungsenergie in Form einer Funktion der Temperatur des Gegenstandes (24) reflektiert,

(c) eine Lichtdetektoreinrichtung (28), um Änderungen des von der Temperatursensoreinrichtung (40) reflektierten Lichts zu erfassen, und

(d) eine Steuereinrichtung (42, 44, 46, 48, 50), um die Strobeimpulseinrichtung (20) in Abhängigkeit von der Lichtdetektoreinrichtung (28) zu aktivieren,

wobei die Lichtdetektoreinrichtung (28), das durch die Temperatursensoreinrichtung (40) reflektierte Licht als ein Maß der Temperatur an dem Gegenstand (24) erfaßt und die Strobeimpulseinrichtung (20) aktiviert, um den Gegenstand (24) aufzuwärmen.

2. Vorrichtung nach Anspruch 1, bei dem die Strobeimpulseinrichtung (20) ein Xenonstrobelicht enthält.

3. Vorrichtung nach Anspruch 1, bei der die Lichtquelle (26) eine Leuchtdiode (26) ist.

4. Vorrichtung nach Anspruch 1, bei der die Temperatursensoreinrichtung (40) ein Flüssigkristall ist.

5. Vorrichtung nach Anspruch 3, dadurch gekennzeichnet, daß die Leuchtdiode (26) eine Infrarotleuchtdiode ist.

6. Vorrichtung nach Anspruch 3, dadurch gekennzeichnet, daß die Leuchtdiode (26) sichtbares Licht abgeben kann.

7. Vorrichtung nach Anspruch 1, dadurch gekennzeichnet, daß der schnell rotierende Gegenstand (24) eine Probenbehandlungskarte (24) in einer Zentrifuge (10, 14, 16) aufweist.

8. Verfahren zum Aufwärmen eines schnell rotierenden Gegenstands (24), der eine Temperatursensoreinrichtung und ein Anzeigeelement (40) hat, das an diesem angebracht ist, welches die folgenden Schritte aufweist:

(a) Beleuchten des Temperatursensor- und Anzeigeelements (40) mit einer Lichtquelle (26),

(b) Messen der Änderung des von dem Temperatursensor- und Anzeigeelements (40) reflektierten Lichts, wobei die Temperatursensor- und Anzeigeeinrichtung (40) derart beschaffen ist, daß sie Licht als eine Funktion der Temperatur des Gegenstandes (24) reflektiert, und

(c) Aktivieren eines Strobelichts (20) in Abhängigkeit von der Messung im Schritt (b) und synchron mit der Drehung des Gegenstandes (24), um Strahlungsenergie auf den Gegenstand (24) zur Erwärmung desselben zu richten.

9. Verfahren nach Anspruch 8, bei dem eine Leuchtdiode als Lichtquelle verwendet wird.

10. Verfahren nach Anspruch 8, gekennzeichnet durch den Schritt, gemäß dem das indirekt reflektierte Licht zur Bestimmung der Änderung des Reflexionsvermögens des Temperatursensor- und Anzeigeelements (40) gemessen wird.

**Revendications**

1. Appareil de chauffage d'un article (24) tournant rapidement et équipé d'un dispositif de détection de température, comprenant:

(a) un dispositif d'échantillonnage (20) capable d'émettre de l'énergie sous forme d'un rayonnement et disposé de manière qu'il rayonne de l'énergie sur l'article (24),

(b) une source lumineuse (26) disposée afin qu'elle éclaire le dispositif (40) de détection de température porté sur l'article (24) pendant une partie de la rotation de l'article (24), le dispositif de détection de température étant destiné à réfléchir l'énergie sous forme d'un rayonnement en fonction de la température de l'article (24),

(c) un dispositif de détection de lumière (28) destiné à détecter des changements de lumière réfléchie par le dispositif de détection de température (40), et

(d) un dispositif de commande (42, 44, 46, 48, 50) destiné à exciter le dispositif d'échantillonnage (20) sous la commande du dispositif de détection de lumière (28),

le dispositif (28) de détection de lumière détectant la lumière réfléchie par le dispositif de détection de température (40) sous forme d'une mesure de la température de l'article (24) et commande le dispositif d'échantillonnage (20) afin que l'article (24) soit chauffé.

2. Appareil selon la revendication 1, dans lequel le dispositif d'échantillonnage (20) comporte une lampe d'échantillonnage au xénon.

3. Appareil selon la revendication 1, dans lequel la source lumineuse (26) est une diode photoémissive (26).

4. Appareil selon la revendication 1, caractérisé en ce que le dispositif (40) de détection de température est une matière cristalline liquide.

5. Appareil selon la revendication 3, caractérisé en ce que la diode photoémissive (26) est une diode photoémissive infrarouge.

6. Appareil selon la revendication 3, caractérisé en ce que la diode photoémissive (26) peut émettre de la lumière visible.

7. Appareil selon la revendication 1, caractérisé en ce que l'article tournant rapidement (24) comporte une carte de traitement d'échantillon (24) placée dans une centrifugeuse (10, 14, 16).

8. Procédé de chauffage d'un article tournant rapidement (24) ayant un élément de détection et d'indication de température (40) monté sur lui, comprenant les étapes suivantes:

(a) l'éclairement de l'élément de détection et d'indication de température (40) par une source lumineuse (26),

(b) la mesure du changement de lumière réfléchie provenant de l'élément de détection et d'indication de température (40), le dispositif (40) de détection et d'indication de température étant destiné à réfléchir la lumière en fonction de la température de l'article (24), et

(c) l'excitation d'une lampe d'échantillonnage (20) à la suite de la mesure de l'étape (b) et en synchronisme avec la rotation de l'article (24) afin que de l'énergie soit émis sur l'article (24) par rayonnement et chauffe cet article.

9. Procédé selon la revendication 8, dans lequel une diode photoémissive (26) est utilisée comme source lumineuse.

10. Procédé selon la revendication 8, caractérisé par l'étape de mesure indirecte de la lumière réfléchie de manière que la variation du pouvoir réflecteur de l'élément de détection et d'indication de température (40) soit déterminée.

EP 0 160 283 B1

FIG. I

FIG. 2

1

EP  0 160 283  B1

FIG. 3

FIG. 4

2

52  54

26

28

A/D

42

CPU

44

COMPARITOR

46

POWER
SUPPLY

50

TRIGGER

48

20

_FIG. 6_

24

_FIG. 5_

40

26

28

58

56

_FIG. 7_

40

24